# EUROPEAN PATENT APPLICATION

(11) **EP 2 445 163 A1**
(43) Date of publication of application: **25.04.2012**
(21) Application number: 10788747.3
(22) Date of filing: 11.05.2010
(51) Int. Cl.: H04L 29/06

(54) **CALL INQUIRY TRANSFER METHOD AND SYSTEM FOR VIRTUAL PRIVATE NETWORK (VPN)**

(30) Priority: 15.06.2009 CN 200910149043
(71) Applicant: ZTE Corporation, Shenzhen, Guangdong 518057 (CN)
(72) Inventor: MEI, Junjun, Shenzhen Guangdong 51805 (CN); HAN, Yinjun, Shenzhen Guangdong 518057 (CN); LUO, Huiping, Shenzhen Guangdong 518057 (CN); GUO, Bin, Shenzhen Guangdong 518057 (CN)
(74) Representative: Bongiovanni, Simone
(86) International application number: PCT/CN2010/072618
(87) International publication number: WO 2010/145351

(57) **Abstract**

The present invention provides a call query refer method and a call query refer system for the virtual private network (VPN). The method comprises the following steps: initiating, by a first user, a refer request (Refer) to an application server of a first network where the first user is located (S102); transmitting media information of a third user to a second user through an application server of a second network where the second user is located in response to the refer request (S104); transmitting media information of the second user to the third user (S106); and establishing a call between the second user and the third user (S108). By the virtue of the present invention, a user can realize referring a call to a third party in the mode of initiating a refer request (Refer) in the broadband VPN based on SIP protocol. The present invention enriches the functions of the VPN service, and improves user experience.

## Description

### Field of the Invention

The present invention relates to the communication field, and in particular, to a call query refer method and system for the virtual private network (VPN).

### Background of the Invention

With the development of the social economy and the enlargement of the enterprise scale, convenient communications among internal departments of an enterprise or a group become extremely important, especially to the regional-crossing groups. The VPN service is a service for group users, which allocates a short number to each member in a group, wherein each short number corresponds to an actual number (long number) of each member; members in the group communicate with each other via the short numbers and enjoy the charge preference; thereby communications between group users are greatly facilitated.

The current VPN service is basically developed based on narrow-band networks, with the wide application of IP networks and the Internet, the broadband VPN service based on SIP (Session Initialization Protocol), due to its feature of diversity, flexibility and merging ability, will be greatly developed and applied. However, this is no call query refer method for the VPN based on broadband SIP protocol to refer a call to another user in related art.

### Summary of the Invention

The present invention provides a call query refer solution for the VPN to solve at least the above problem.

An aspect of the present invention provides a call query refer method for the VPN. The method comprises the following steps: initiating a refer request, by a first user, to an application server of a first network where the first user is located; transmitting media information of a third user to a second user through an application server of a second network where the second user is located in response to the refer request; transmitting media information of the second user to the third user; and establishing a call between the second user and the third user.

Furthermore, initiating a refer request, by a first user, to an application server of a first network where the first user is located comprises: transmitting the refer request to the application server of the first network through a serving-call session control function (S-CSCF) of the first network; acquiring, by the application server, the refer request of the first network, and routing the refer request to the S-CSCF of the first network; transmitting the refer request to a private simulation service (PSS) entity through the S-CSCF of the first network; returning the response of the PSS entity to the first user through the S-CSCF of the first network and the application server of the first network.

Furthermore, returning the response of the PSS entity to the first user through the S-CSCF of the first network and the application server of the first network comprises: transmitting, by the PSS entity, a within-dialog re-invite message to the third user through the PSS entity, wherein the within-dialog re-invite message is used for the third user to initiate a call invitation message to the second user.

Furthermore, under the condition that the communication number of the third user in the refer request is a short number, before routing the refer request to the S-CSCF of the first network, the method further comprises: acquiring a long number corresponding to the short number by querying the database in the application server of the first network, setting the communication number in the refer request to be the long number.

Furthermore, before initiating, by the first user, the refer request to the application server of the first network where the first user is located, the method further comprises: establishing a call between the first user and the second user; the first user holding the call to the second user, and initiating a call to the third user.

Furthermore, establishing a call between the first user and the second user comprises: triggering the call of the first user to the application server of the first network; when the communication number of the second user is a short number, acquiring the long number corresponding to the short number by querying a database in the application server of the first network; transmitting the call initiated using the long number to the application server of the second network through the S-CSCF of the second network; and transmitting the media information of the second user to the first user through the application server of the second network, and transmitting the media information of the first user to the second user, so as to establish the call between the first user and the second user.

Furthermore, after establishing a call between the second user and the third user, the method further comprises: suspending the call between the first user and the third user, and suspending the call between the first user and the second user.

Furthermore, the first user is the calling user while the first network is the calling network, and the second user is the called user while the second network is the called network.

Furthermore, the first user is the called user while the first network is the called network, and the second user is the calling user while the second network is the calling network.

The present invention further provides a call query refer system for the VPN, the system comprises : an S-CSCF of a first network, connected to a first user, configured to forward a refer request initiated by the first user; an application server of the first network, connected to the S-CSCF of the first network, configured to receive and respond to the refer request from the S-CSCF of the first network; an S-CSCF of a second network, connected to a second user and a third user; and an application server of the second network which is connected to the S-CSCF of the second network and cooperates with the S-CSCF of the second network, configured to exchange the media information of the third user and the media information of the second user base on the response of the application server of the first network to the refer request, and establish a call between the second user and the third user.

Furthermore, the application server of the first network is further configured to, when the number of the third user is a short number, acquire a long number corresponding to the short number by querying the database in the application server of the first network, and set the communication number in the refer request to be the long number.

Furthermore, the system further comprises: a PSS entity, connected to the S-CSCF of the first network, configured to receive the refer request transmitted by the S-CSCF of the first network, and transmit a within-dialog re-invite message to the third user, wherein the within-dialog re-invite message is used for the third user to initiate a call invitation message to the second user.

Through the present invention, a query refer (Refer) request message can be initiated and correspondingly processed in a call, and the query refer function of a call can be realized in the broadband VPN by setting an application server in the network. That is to say, users can realize referring a call to a third party in the mode of initiating a refer request in the broadband VPN based on the SIP protocol. Therefore, the problem that a call in the VPN based on the SIP protocol cannot be referred to another user in related art is solved, the functions of the VPN service it enriched and the user experience is improved.

### Brief Description of the Drawings

The drawings illustrated hereinafter provide a further understanding of the present invention and form a part of the present application. The exemplary embodiments and the description thereof are used to explain the present invention without unduly limiting the scope of the present invention. Wherein,
Fig. 1 is a flow chart of a call query refer method for the VPN according to an embodiment of the present invention;
Fig. 2 is a structure diagram of a call query refer system for the VPN according to an embodiment of the present invention;
Fig. 3 is a flow chart of a VPN user A calling a VPN user B according to an embodiment of the present invention;
Fig. 4 is a flow chart of a VPN user A calling a non-VPN user B according to an embodiment of the present invention;
Fig. 5 is a flow chart of a non-VPN user A calling a VPN user B according to an embodiment of the present invention; and
Fig. 6 is a flow chart of a VPN user A referring a VPN user C after a call is established between the VPN user A and a VPN user B according to an embodiment of the present this invention.

### Detailed Description of Embodiments

The present invention will be described in detail with reference to the accompanying drawings and in conjunction with the embodiments hereinafter. It should be noticed that, the embodiments of this application and the features in the embodiments can be combined with each other if there is no conflict.

The present embodiment according to the present invention provides a call query refer method for the VPN.

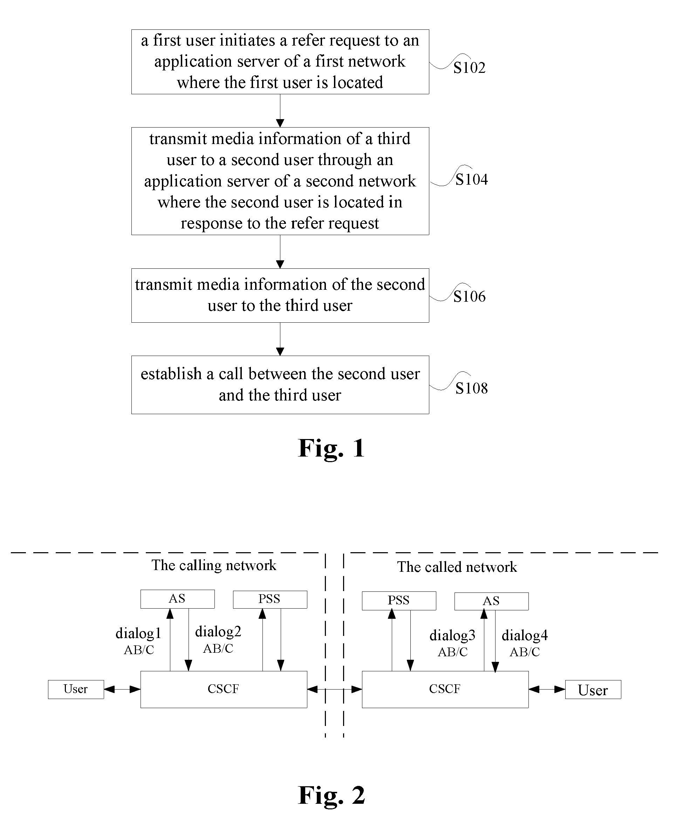

As shown in Fig. 1, the method comprises the following steps.

Step S102, a first user initiates a refer request to an application server of a first network where the first user is located.

Step S104, respond to the refer request, transmit the media information of a third user to a second user through an application server of a second network where the second user is located.

Step S106, transmit the media information of the second user to the third user.

Step S108, establish a call between the second user and the third user.

Through the embodiment of the present invention, the referring of a call to a third party can be realized by initiating a refer request in the broadband VPN based on the SIP protocol. Therefore, the problem that a call in the VPN based on the SIP protocol cannot be referred to another user in related art is solved, the functions of the VPN service are enriched, and the user experiences are improved.

Preferably, the first user can be the calling user while the first network can be the calling network, and the second user can be the called user while the second network can be the called network.

Preferably, the first user also can be the called user while the first network also can be the called network, and the second user also can be the calling user while the second network also can be the calling network.

The embodiment of the present invention is realized through the AS (Application Server). The AS provides VPN service logic, converts a short number of a user to a long number, and performs associated transmission of a within-dialog REFER (Refer) message and the response thereof as well as a NOTIFY (Notify) message and the response thereof. Users should subscribe the VPN service on the S-CSCF (Serving-call Session Control Function), and the users requiring referring also need to subscribe the call refer service on the PSS (PSTN/ISDN Simulation Services).

First, a VPN user A calls a VNP user B. The S-CSCF of the calling network triggers the call of the user A to the AS of the calling network, wherein if the number called by the user A is the short number of the user B, then the AS of the calling network queries a database to acquire the long number of the user B. The AS of the calling network uses the long number of the user B to call the user B, and the call is routed to the S-CSCF of the called network. Since the user B has also subscribed the VPN service, the S-CSCF of the called network triggers the call to the AS of the called network, and then the AS of the called network initiates the call to the user B. The user B rings and answers to it. The media information negotiation between the user A and the user B is completed, and the call between them is established. In this case, the media information comprises network port number, IP address, video/audio choice, encode mode and etc. The media information negotiation is a process that users of calling side and called side send media information to each other and then confirm it.

After the call between the user A and the user B is established, the user A decides to refer the call, which means establishing a call between the user B and a VPN user C and letting the user A itself quit. The user A holds the call between the user A and user B, and at the same time, initiates a new call to the user C. After the media information negotiation between A and C is completed, the media information negotiation between the user B and the user C is performed, and a call between B and C is established.

During the above process, as for the dialog between A and B, the dialog established by the calling network S-CSCF calling to the AS is indicated as dialog 1AB (dialog1AB), the dialog established by the AS calling to the S-CSCF is indicated as dialog 2AB, the dialog established by the called network S-CSCF calling to the AS is indicated as dialog 3AB (dialog3AB), the dialog established by the AS calling to the S-CSCF is indicated as dialog 4AB (dialog4AB). As for the dialog between A and C, the dialog established by the calling network S-CSCF calling to the AS is indicated as dialog 1AC (dialog1AC), the dialog established by the AS calling to the S-CSCF is indicated as dialog 2AC, the dialog established by the called network S-CSCF calling to the AS is indicated as dialog 3AC (dialog3AC), the dialog established by the AS calling to the S-CSCF is indicated as dialog 4AC (dialog4AC).

In order to establish a call between the user B and the user C, the user A should quit. The user A initiates a Refer request in the dialog1AB, and carries the dialog1AC in the Replaces parameter of the Refer-To header. After receiving the Refer message, the AS acquires the dialog1AC, initiates a Refer request in the dialog2AB, and carries the dialog2AC in the Replaces parameter of the Refer-To header. After receiving the Refer, the PSS returns a 202 Refer response to the user A and transmits a Notify request to the user A. The AS receives the 202 Refer and Notify request in the dialog2AB, returns the 202 Refer response and transmits the Notify request in the dialog1AB, and routes them to the user A; meanwhile, the AS receives a Re-INVITE (reinvite) message without SDP (Session Description Protocol) information initiated by the PSS in the dialog3AC, and the AS initiates a reinvite without SDP information in the dialog4AC, after it is routed to the user C, the user C returns a 200 reinvite which carries the SDP information of the user C; when the AS has received the 200 reinvite of the user C in the dialog4AC, the AS returns a 200 reinvite which carries the SDP information in of user C in the dialog3AC. When this the 200 reinvite which carries the SDP information of the user C reaches the PCC, the PSS initiates a reinvite which carries the SDP information of the user C, the reinvite is routed to the dialog3AB of the AS. The AS initiates a reinvite which carries the SDP information of the user C in the dialog4AB, and routes it to the user B; the user B returns a 200 reinvite which carries the SDP information of the user B; the 200 reinvite which carries the media information of the user B is forwarded by the PSS, CSCF and the AS, and finally brings the SDP information of the user B to the user C through the ACK. When the user B returns the 200 reinvite and routes it to the PSS, the PSS initiates a Notify to the user A to notify the user A that the user B has already answered, at the same time, initiates a BYE (Bye) message in dialog between the user A and the user C to release the user A; then the user A initiates a BYE to release the call with the user B. At this point, the user A completes the call refer function, refers the call with the user B to the user C, establishes a call between the user B and the user C, and the user A itself quits.

An embodiment according to the invention will be described hereinafter.

The Fig.2 is a structure diagram of a call query refer system for the VPN according to an embodiment of the present invention. Users subscribe the VPN service on the CSCF, and users requiring for the refer function subscribe call refer service on the PSS (PSTN/ISDN Simulation Service). The AS stores the corresponding information of the long number and the short number of users in the database.

The system comprises: an S-CSCF of a first network which is connected to a first user and configured to forward a refer request initiated by the first user; an application server of the first network which is connected to the S-CSCF of the first network and configured to receive and respond to the refer request from the S-CSCF of the first network; an S-CSCF of the second network which is connected to the second user and the third user; and an application server of the second network which is connected to the S-CSCF of the second network and cooperates with the S-CSCF of the second network, configured to exchange the media information of the third user with the media information of the second user base on the response of the application server of the first network to the refer request, and establish a call between the second user and the third user.

Preferably, the application server of the first network is further configured to, when the number of the third user is a short number, acquire a long number corresponding to the short number by acquiring the database in the application server of the first network, and set the communication number in the refer request to be the long number.

Preferably, the system further comprises: a PSS entity which is connected to the S-CSCF of the first network and configured to receive the refer request transmitted by the S-CSCF of the first network, and transmit a within-dialog re-invite message to the third user, wherein the within-dialog re-invite message is for the third user to initiate the call invitation message to the second user.

Preferably, the first user can be the calling user while the first network can be the calling network, and the second user can be the called user while the second network can be the called network.

It should be noticed that, in the drawings of the embodiments of the present invention, the interactions with the network elements of I-CSCF (inquiry CSCF) and P-CSCF (agency CSCF) are all omitted.

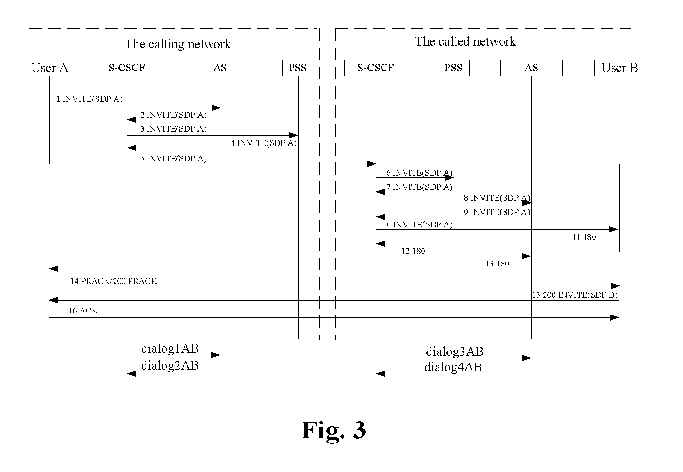

Fig. 3 is a flow chart of a VPN user A calling a VPN user B according to an embodiment of the present invention.
1. the user A initiates a call which carries the media information SDP A of its own. When the call is routed to the S-CSCF of the calling network, the S-CSCF finds out that this user has subscribed the VPN service, and then the S-CSCF of the calling network triggers the call to the AS of the calling network.
2. if the user A calls the short number of the user B, the AS converts the number to be the long number of the B; if the A calls the long number of B, the AS does not convert it. The AS transmits an Invite which carries the SDP A to the S-CSCF of the calling network by using the long number of B.
3. the S-CSCF of the calling network triggers the call to the PSS of the calling network.
4. the PSS of the calling network triggers the call to the S-CSCF of the calling network.
5. the S-CSCF of the calling network routes the call which carries the media SDP A of the user A to the S-CSCF of the called network.
6. the S-CSCF of the called network triggers the call to the PSS of the called network.
7. the S-CSCF of the called network triggers the call to the S-CSCF of the called network.
8. the S-CSCF of the called network finding out that the called user has also subscribed the VPN service, triggers the call to the AS of the called network.
9-10. the AS of the called network routes the call to the called user B through the CSCF.
11. the called user rings and returns 180.
12. the 180 is routed to the AS of the called network.
13. after the 180 is routed by the AS, S-CSCF, PSS of the called network and the S-CSCF, PSS and AS of the calling network, the 180 finally reaches the calling user A.
14. the S-CSCF of the calling user A and the S-CSCF, the PSS, the AS of the calling network, PRACK200 PRACK of the S-CSCF , the PSS, the AS of the called network.
15. the called user B answers, returns 200 Invite response which carries the media information SDP of its own. The 200 Invite response is finally routed to the calling user A.
16. the calling user A and the S-CSCF, the PSS, the AS of the calling network, ACK of the S-CSCF, the PSS, the AS of the called network.

At this point, the call between the VPN user A and VPN user B is established.

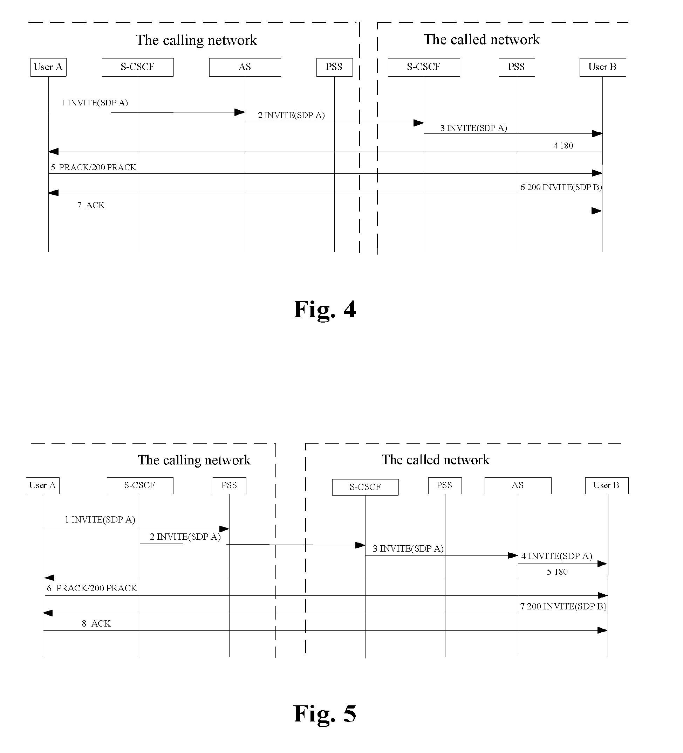

Fig. 4 is a flow chart of a VPN user A calling a non-VPN user B according to an embodiment of the present invention. The calling process of the calling side is as same as the calling process of the calling side shown in the Fig. 2. The call of the called side does not pass the AS since the called user is not a VPN user.
Fig. 5 is a flow chart of a non-VPN user A calling a VPN user B according to an embodiment of the present invention. The call of the calling side does not pass the AS since the calling user is not a VPN user; the calling process of the called side is as same as the calling process of the called party shown in the Fig. 2.

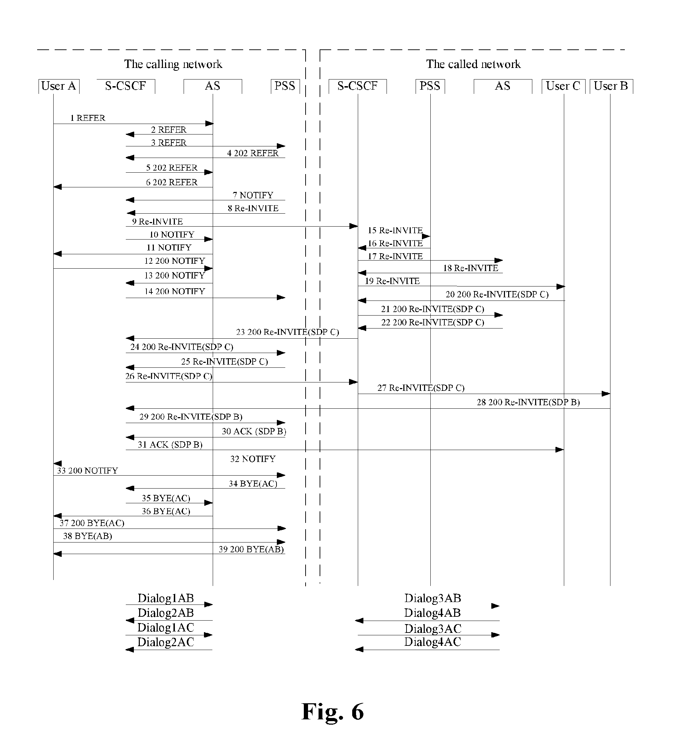

Fig. 6 is a flow chart of a VPN user A referring a VPN user C after a call is established between the VPN users A and a VPN user B according to an embodiment of the present invention, as shown in the Fig. 6, the process of a VPN user A referring a VPN user C after a call is established between the VPN users A and a VPN user is used to explain the referring process.

First, the user A transmits a Re-Invite to the user B which carries the SDP of sendonly (Send only) direction; the user B responds with a 200 Re-Invite which carries the SDP of recvonly (Receive only) direction, the user B is held after the media information negotiation succeeds; at the same time, the user A calls the user C using the same process of calling the user B shown in the Fig.2; after the user C answers, a call between the user A and the user B is established.

Then, the user A initiates a Refer request in the call, as shown in the Fig.6, connects the user B with the user C and quits itself to complete the referring operation.
1. the user A initiates a Refer request, the request is routed to the AS of the calling network, the AS receives the request in the dialog1AB. The Refer-To header of the Refer request carries number information of the user C, the Replaces parameter carries the dialog information of the dialog1AC to refer the call between the user A and the user B to a call between the user B and the user C.
2. after the AS receives the Refer request, if the number of the user C carried in the Refer-To header is a short number, then the AS converts it to be a long number; the AS acquires the dialog1AC from the Replaces parameter, acquires the associated dialog2AC according to the dialog1AC, and initiates a Refer in the associated dialog2AB of the dialog1AB, wherein the long number of the user C is carried in the Refer-To header, and the dialog information of the dialog2AC is carried in the Replaces parameter.
3. the Refer request is routed to the PSS by the S-CSCF of the calling network.
4. the PSS returns a 202 Refer.
5. the S-CSCF routes the 202 Refer to the AS, the AS receives the response in the dialog2AB.
6. the AS returns a 202 Refer response in the associated dialog1AB of the dialog2AB, the response is finally routed to the user A.
7. the PSS of the calling network initiates a Notify in the dialog between A and B, the message body is 100 trying which represents that the referring is being processed.
8-9. the PSS of the calling network initiates a Re-Invite in the A, C dialog, and the Re-Invite is routed to the S-CSCF of the called network.
10-14. the AS receives the Notify in the dialog2AB after the Notify of the calling network PSS arrives at the AS, and initiates a Notify in the associated dialog1AB of the dialog2AB, wherein the message body is 100 trying, and the Notify is finally routed to the user A; the user A returns a 200 Notify response, and the response is routed to the AS; the AS receives the response in the dialog1AB, and initiates a 200 Notify response in the associated dialog2AB of the dialog1AB, the response is finally routed to the PSS.
15-24. the Re-Invite initiated by the PSS in the dialog between A and C is routed to the AS of the called network, the AS receives the Re-Invite in the dialog3AC and initiates a Re-Invite which is finally routed to the user C in the associated dialog4AC of the dialog3AC; the user C returns a 200 Re-Invite response which carries the updated media SDP C, wherein the 200 Re-Invite response is finally routed to the PSS of the calling network.
25-26. the PSS of the calling network initiates a Re-Invite which carries the media information SDP C of the user C in the dialog between A and B, wherein the Re-Invite is routed to the S-CSCF of the called network.
27. the Re-Invite carrying the SDP C is finally routed to the user B though the PSS, AS and S-CSCF of the called network.
28-29. the B returns a 200 Re-Invite which carries the updated media SDP B, wherein the 200 Re-Invite is finally routed to the PSS of the calling network after being routed by the S-CSCF, PSS, AS of the called network and the S-CSCF of the calling network.
30-31. the PSS of the calling network initiates an ACK which carries the media information SDP B of the user B in the dialog between A and C, wherein the ACK finally reaches the user C though the S-CSCF of the calling network, the S-CSCF of the called network, PSS and AS. Thus, the user B and the user C complete the media information negotiation; a call between them is established.
32-33. the PSS of the calling network initiates a Notify in the dialog between A and B, the message body is 200 OK which represents a successful referring, similar to the 10-14, the Notify is finally routed to the user A, and the user A returns a 200 Notify response, which is finally routed to the PSS of the calling network.
34-37. the PSS of the calling network initiates a Bye in the dialog between A and C, the AS receives the Bye in the dialog2AC when the Bye is routed to the AS, then returns a 200 Bye, and initiates a Bye which is finally routed to the user A in the associated dialog1AC of the dialog2AC; the user A returns a 200 Bye which is routed to the AS. At this point, the call established between the user A and the user C is released.
38-39, the A initiates a Bye in the dialog between A and B, the AS receives the Bye request in the dialog1AB when the Bye is routed to the AS, the returns a 200 Bye, and initiates a Bye which is finally routed to the PSS of the calling network in the associated dialog2AB of the dialog1AB; the PSS returns a 200 Bye which is routed to the AS. At this point, the call established between the user A and the user B is released.

The Fig.6 only represents the process of the calling user A initiates a referring operation. If the user B has subscribed the refer service, the user B also can initiate a referring operation to hold the user A, call the user C, and perform a similar process as the process shown in the Fig.6. The user B initiates a Refer and finally establishes a call between the user A and the user C, then quits itself.

In the above, only the referring process when the user A, B and C are all VPN users is described. If the user A is a VPN user, no matter whether the user B and the user C are VPN users or not, the referring process initiated by the user A is similar to the process shown in the Fig.6, the Refer and response thereof, the Notify and response thereof need to be processed though the AS of the calling network; if the user B is a VPN user, no matter whether the user A and the user C are VPN users or not, the referring process initiated by the user B is similar to the process shown in the Fig.6, the Refer, response thereof, the Notify and response thereof need to be processed though the AS of the called network.

In summary, the embodiments of the present invention relate to an AS based on the SIP protocol realizing a call query refer solution in the IMS network. That is to say, a user can realize referring a call to a third party by the mode of initiating a Refer request on a broadband VPN based on the SIP protocol. By the virtue of the present invention, the problem that a call in the VPN based on the SIP protocol cannot be referred to another user in the related art is solved, the functions of the VPN service it enriched and the user experience is improved.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A call query refer method for the virtual private network (VPN), **characterized in that** the method comprises the following steps:
initiating a refer request, by a first user, to an application server of a first network where the first user is located;
transmitting media information of a third user to a second user though an application server of a second network where the second user is located in response to the refer request;
transmitting media information of the second user to the third user; and
establishing a call between the second user and the third user.

2. The method according to claim 1, **characterized in that** the step of initiating a refer request, by a first user, to an application server of a first network where the first user is located comprises:
transmitting the refer request to the application server of the first network through a serving-call session control function (S-CSCF) of the first network;
acquiring, by the application server, the refer request of the first network, and routing the refer request to the S-CSCF of the first network;
transmitting the refer request to a private simulation service (PSS) entity through the S-CSCF of the first network;
returning the response of the PSS entity to the first user through the S-CSCF of the first network and the application server of the first network.

3. The method according to claim 2, **characterized in that** the step of returning the response of the PSS entity to the first user through the S-CSCF of the first network and the application server of the first network comprises:
transmitting, by the PSS entity, a within-dialog re-invite message to the third user through the PSS entity, wherein the within-dialog re-invite message is used for the third user to initiate a call invitation message to the second user.

4. The method according to claim 2, **characterized in that** under the condition that the communication number of the third user in the refer request is a short number, before the step of routing the refer request to the S-CSCF of the first network, the method further comprises:
acquiring a long number corresponding to the short number by querying a database in the application server of the first network, and setting the communication number in the refer request to be the long number.

5. The method according to claim 1, **characterized in that** before the step of initiating, by the first user, the refer request to the application server of the first network where the first user is located, the method further comprises:
establishing a call between the first user and the second user;
the first user holding the call between the first user and the second user, and initiating a call to the third user.

6. The method according to claim 5, **characterized in that** the step of establishing a call between the first user and the second user comprises:
triggering the call of the first user to the application server of the first network;
when the communication number of the second user is a short number, acquiring the long number corresponding to the short number by querying the database in the application server of the first network;
transmitting the call initiated using the long number to the application server of the second network through the S-CSCF of the second network; and
transmitting the media information of the second user to the first user through the application server of the second network, and transmitting the media information of the first user to the second user, so as to establish the call between the first user and the second user.

7. The method according to any of claims 1 to 6, **characterized in that** after the step of establishing a call between the second user and the third user, the method further comprises:
suspending the call between the first user and the third user; and
suspending the call between the first user and the second user.

8. The method according to claim 7, **characterized in that** the first user is the calling user while the first network is the calling network, and the second user is the called user while the second network is the called network.

9. The method according to claim 7, **characterized in that** the first user is the called user while the first network is the called network and the second user is the calling user while the second network is the calling network.

10. A call query refer system for the virtual private network (VPN), **characterized in that** the system comprises:
an S-CSCF of the first network, connected to the first user, configured to forward a refer request initiated by the first user;
an application server of the first network, connected to the S-CSCF of the first network, configured to receive and respond to the refer request from the S-CSCF of the first network;
an S-CSCF of the second network, connected to the second user and the third user; and
an application server of the second network which is connected to the S-CSCF of the second network and cooperates with the S-CSCF of the second network, configured to exchange the media information of the third user and the media information of the second user based on the response of the application server of the first network to the refer request, and establishing a call between the second user and the third user.

11. The system according to claim 10, **characterized in that** the application server of the first network is further configured to, when the number of the third user is a short number, acquire a long number corresponding to the short number by querying a database in the application server of the first network, and set the communication number in the refer request to be the long number.

12. The system according to claim 10 or 11, **characterized in that** the system further comprises:
a PSS entity, connected to the S-CSCF of the first network, configured to receive the refer request transmitted by the S-CSCF of the first network, and transmit a within-dialog re-invite message to the third user, wherein the within-dialog re-invite message is used for the third user to initiate a call invitation message to the second user.
